Europäisches Patentamt

European Patent Office

Office européen des brevets

(11) Veröffentlichungsnummer: **0 647 698 A1**

(12) **EUROPÄISCHE PATENTANMELDUNG**

(21) Anmeldenummer: **94115185.4**

(22) Anmeldetag: **27.09.94**

(51) Int. Cl.⁶: **C10B 53/00**

(30) Priorität: **07.10.93 DE 4334114**

(43) Veröffentlichungstag der Anmeldung:
**12.04.95 Patentblatt 95/15**

(84) Benannte Vertragsstaaten:
**AT BE CH DE DK ES FR GB GR IE IT LI LU MC NL PT SE**

(71) Anmelder: **HOECHST AKTIENGESELLSCHAFT**
**Brüningstrasse 50**
**D-65929 Frankfurt am Main (DE)**

(72) Erfinder: **Lyding, Günther**
**Johann-Strauss-Strasse 62**
**D-65779 Kelkheim (DE)**
Erfinder: **Pille, Maria**
**Johannesallee 15**
**D-65929 Frankfurt (DE)**
Erfinder: **v. Plessen, Helmold, Dr.**
**Kugelherrnstrasse 16**
**D-61462 Königstein (DE)**
Erfinder: **Semel, Joachim, Dr.**
**Zum Kohlwaldfeld 6**
**D-65817 Eppstein (DE)**

(54) Verfahren zur Gewinnung von Wertstoffen bei der Aufarbeitung von Polyvinylchlorid.

(57) Erhitzt man Polyvinylchlorid, insbesondere weichmacherhaltiges Polyvinylchlorid, unter Ausschluß von Sauerstoff auf eine Temperatur von 250 bis 500 °C, so lassen sich ein chlorarmer kohlenstoffhaltiger Rückstand, Weichmacher und Chlorwasserstoff gewinnen.

Fig. 1

Die Erfindung bezieht sich auf ein Verfahren zur Aufarbeitung von Polyvinylchlorid, bei welchem Weichmacher und andere Wertstoffe zurückgewonnen werden.

Die Deponierung von Kunststoffabfällen wird immer problematischer, es muß versucht werden, das anfallende Material zu verwerten. Eine Möglichkeit dazu bietet die Verbrennung unter Gewinnung thermischer Energie. Dafür geeignete Kraftwerke, die emissionsarm arbeiten, sind teuer. Zudem werden bei der Verbrennung entstehende toxische Abgaskomponenten zunehmend als Belastung empfunden. Der Kunststoff Polyvinylchlorid (PVC) wird in dieser Hinsicht besonders kritisch betrachtet.

Dieser Sachverhalt war Anlaß nach Verfahren zur stofflichen Verwertung der PVC-Abfälle zu suchen. PVC-Abfälle können zu neuen PVC-Teilen verarbeitet werden. Die Verarbeitungsmöglichkeiten und die Qualität der aus den Abfällen herstellbaren Produkte richten sich aber danach, ob die Abfälle sauber oder verschmutzt, sortenrein oder gemischt oder, oder aus einer oder mehreren Komponenten bestehen. Um dabei bestehenden Schwierigkeiten aus dem Weg zu gehen, wird versucht, den Chlorgehalt der PVC-Abfälle in Form von Salzsäure oder nach Neutralisation als Salzlösung zurückzugewinnen. Diese Produkte fallen - außer bei hohen Spaltungstemperaturen - stets stark verunreinigt an, so daß sie einer aufwendigen Reinigung bedürfen.

Um solchen Erfordernissen auszuweichen, ist vorgeschlagen worden, die PVC-Abfälle, gegebenenfalls nach einer Vorbehandlung (Sortierung, Reinigung, Zerkleinerung) mit Metallen oder Metallverbindungen zur Reaktion zu bringen (vgl. DE 4 038 896). Die Kohlenwasserstoffe des PVC dienen als Reduktionsmittel und können den sonst üblicherweise zugesetzten Kohlenstoff ersetzen, während der Chloranteil wie das sonst in Form von anderen chlorhaltigen Stoffen zugesetzte Chlor oder wie gasförmiges Chlor reagiert.

Nachteilig für den Prozeß sind die unterschiedlichen Geschwindigkeiten der Teilreaktionen, so daß das Verfahren in einzelnen Schritten in gesonderten Reaktionsräumen durchgeführt werden muß.

Ein anderes Verfahren sieht vor, Polyolefine und halogenhaltige Polyolefine zu mischen und bei ca. 200°C mit 5 bis 15 % Calciumverbindungen oder Salzen langkettiger Fettsäuren umzusetzen (vgl. EP 510 800). Das Polymergemisch soll anschließend nach üblichen Verfahren zu Kunststoffartikeln verarbeitet werden. Abgesehen davon, daß der Verbleib der Metallverbindungen in den Kunststoffen deren Eigenschaften ungünstig beeinflussen kann, besteht auch bei diesem Verfahren das Problem der Verträglichkeit unterschiedlicher Kunststoffsorten miteinander.

Es wurde nun gefunden, daß eine Rezyklierung von Wertstoffen aus PVC-Abfällen mit Hilfe eines thermischen Prozesses möglich ist.

Die Erfindung betrifft somit ein Verfahren zur Gewinnung von Wertstoffen bei der Aufarbeitung von Polyvinylchlorid durch thermische Behandlung des Polyvinylchlorids, dadurch gekennzeichnet, daß man das Polyvinylchlorid auf eine Temperatur von 250 bis 500 °C unter Ausschluß von Sauerstoff und Erzeugung von Chlorwasserstoff, kohlenstoffhaltigem Rückstand und einem weichmacherhaltigen Destillat erhitzt und aus dem Destillat durch eine fraktionierte Destillation der Weichmacher zurückgewinnt.

Im erfindungsgemäßen Verfahren wird PVC, insbesondere Weich-PVC, in einem Reaktor bei einer Temperatur von 250 bis 500 °C, vorzugsweise 300 bis 400 °C, einer thermischen Spaltung unterworfen, wobei neben Chlorwasserstoff und kohlenstoffhaltigem Rückstand ein weichmacherhaltiges Destillat gewonnen wird, das verbrannt oder weiter aufgearbeitet werden kann.

Der kohlenstoffhaltige Rückstand enthält im allgemeinen < 0,5 % Chlor und läßt sich ohne Schwierigkeiten aufbereiten oder kann als Brennstoff für den erfindungsgemäßen Prozeß oder für andersartige chemische Verfahren eingesetzt werden.

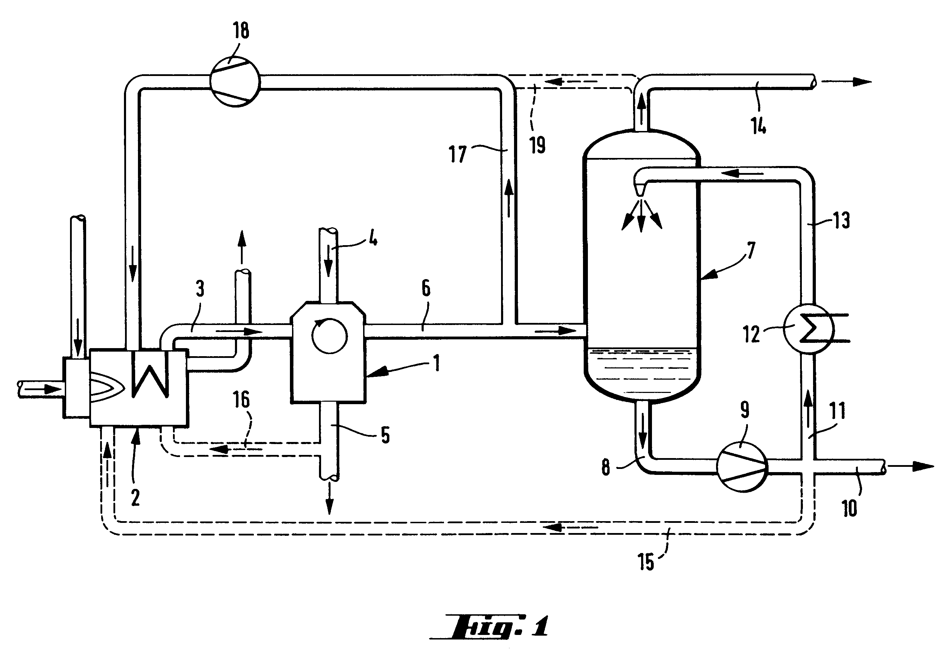

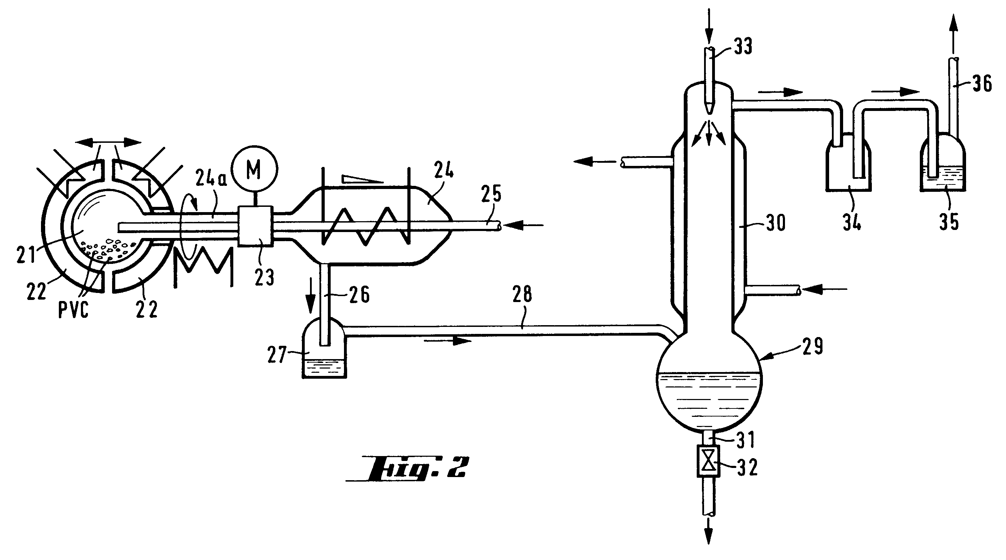

Die Figuren zeigen das erfindungsgemäße Verfahren, wobei Figur 1 ein Schema der großtechnischen Anlage darstellt und Figur 2 die Laboratoriumsapparatur veranschaulicht.

In Figur 1 bedeuten

| | | |
|---|---|---|
| 1 | = | Reaktor |
| 2 | = | Brenner |
| 3 | = | Heißgasleitung |
| 4 | = | Zuleitung |
| 5 | = | Austragsleitung |
| 6 | = | Austragsleitung |
| 7 | = | Kondensator |
| 8 | = | Kondensatableitung |
| 9 | = | Kondensatpumpe |
| 10 | = | Leitung |
| 11 | = | Leitung |
| 12 | = | Wärmetauscher |
| 13 | = | Leitung |

14 = Abgasleitung

15 = Abzweigleitung

16 = Abzweigleitung

17 = Kreisgasleitung

18 = Kreisgaskompressor

19 = Abzweigleitung

In Figur 2 bedeuten

21 = Rotationskolben ( = Reaktor)

22 = Heizpilze

23 = Drehantrieb

24 = Kühler

25 = Zuleitung

26 = Abgang

27 = Sicherheitsvorlage

28 = Übergangsleitung

29 = Sammelvorlage

30 = Kühler

31 = Ablaßleitung

32 = Absperrventil

33 = Zuleitung

34 = Gaswaschflasche

35 = Gaswaschflasche

36 = Abgasleitung

Das erfindungsgemäße Verfahren wird in einer Apparatur durchgeführt, die schematisch in Figur 1 dargestellt ist.

Ein Reaktor (1) ist mit einem Brenner (2) über eine Heißgasleitung (3) verbunden. Weiterhin ist der Reaktor (1) mit einer Zuleitung (4) und Austragsleitungen (5) und (6) versehen, wobei die Austragsleitung (6) eine Verbindung zum Kondensator (7) herstellt. Vom Boden des Kondensators (7) führt eine Kondensatableitung (8) über eine Kondensatpumpe (9) in die Leitung (10), von der eine Leitung (11) abzweigt und über einen Wärmetauscher (12) mit einer Leitung (13) verbunden ist, die ihrerseits am Kopf des Kondensators (7) mündet. Am Kopf trägt der Kodensator (7) noch eine Abgasleitung (14). Von Leitung (10) kann, falls erforderlich, eine Abzweigleitung (15) zum Brenner (2) zurückführen. Ebenso kann von der Austragsleitung (5) eine Abzweigleitung (16) zum Brenner (2) führen. Schließlich ist die Austragsleitung (6) über eine Kreisgasleitung (17) über einen Kreisgaskompressor (18) mit dem Brenner (2) verbunden. Alternativ kann ein Teil des Gasstromes (14) über die Gasleitung (19) und den Kreisgaskompressor (18) in den Prozeß zurückgeführt werden.

Die Laborapparatur gemäß Figur 2 besteht im wesentlichen aus einem Rotationsverdampfer, welcher mit einem Kühler und einer Vorlage verbunden ist. Der Rotationskolben (21) ist der Reaktor, welcher von zwei Heizpilzen (22) umschlossen ist. Der Kolben (21) wird durch den Drehantrieb (23), der das Verbindungsrohr (24a) umschließt, zur Rotation gebracht. Zu einem Rotationsverdampfer gehört ein Kühler (24), durch welchen hier eine Zuleitung (25) bis in den Kolben (21) geführt ist. Der Abgang (26) des Kühlers (24) ist mit einer Vorlage (27) verbunden, die ihrereseits mittels einer Übergangsleitung (28) mit der Sammelvorlage (29) verbunden ist. Die Sammelvorlage (29) besitzt unten eine Ablaßleitung (31) mit einem Absperrventil (32). Auf der Sammelvorlage (29) sitzt ein Kühler (30) mit einer Zuleitung (33) am oberen Ende. Weiterhin ist der Kühler (30) am oberen Ende über zwei Gaswaschflaschen (34) und (35) mit einer Abgasleitung (36) verbunden.

Im technischen Maßstab des erfindungsgemäßen Verfahrens gemäß Figur 1 werden PVC-Abfälle, gegebenenfalls nach Vorbehandlung durch Sortierung, Reinigung und Zerkleinerung, dem Reaktor (1) zugeführt, der mit den zurückgeführten Spaltungsgasen des Prozesses auf eine Temperatur von 250 bis 500 °C, vorzugsweise 300 bis 400 °C geheizt wird. Nach Durchlaufen des Reaktors (1) unter Ausschluß von Sauerstoff verbleibt von dem Kunststoffmaterial ein dunkelfarbiger Rückstand, der durch die Austragsleitung (5) entfernt wird und nach Abkühlung und etwaiger Wäsche oder sonstiger Nachbehandlung sich für eine weitere Verwendung mahlen oder aufbereiten läßt. Ein Teil des Reaktionsgases wird nach dem Verlassen des Reaktors (1) durch die Kreisgasleitung (17), den Kreisgaskompressor (18), den Brenner (2) und die Heißgasleitung (3) in den Prozeß zurückgeleitet. Im Brenner (2) erfolgt eine Aufheizung des Reaktionsgases durch Wärmetausch mit den im Brenner erzeugten heißen Rauchgasen. Der andere Teil wird über die Austragsleitung (6) dem Kondensator (7) zugeführt. Aus dem aus Kondensatpumpe (9) und Kondensator (7) gebildeten Kreislauf der Kondensationseinrichtung kann flüssiges Destillat kontinuierlich

3

EP 0 647 698 A1

abgezogen werden. Am Kopf des Kondensators entweichen Chlorwasserstoff und nichtkondensierbare Kohlenwasserstoffe sowie inerte Gase über die Abgasleitung (14).

Der in dem Reaktor (1) erhaltene kohlenstoffhaltige Rückstand kann nach Abkühlung und etwaiger Wäsche oder sonstiger Nachbehandlung als Brennstoff, beispielsweise im erfindungsgemäßen Verfahren über Abzweigleitung (16), oder für eine andere Verwendung eingesetzt werden. Ebenso kann ein Teil des am Kopf des Kondensators (7) entweichenden Gasgemischs nach Erhitzung in den Prozeß zurückgeleitet werden (über Abzweigleitung (19)).

Für die thermische Spaltung der PVC-Abfälle können verschiedene Reaktortypen wie Drehrohröfen, Etagenöfen oder Wirbelschichtöfen eingesetzt werden. Besonders vorteilhaft für die Durchführung des erfindungsgemäßen Verfahrens sind Drehrohröfen.

Die gasförmigen Produkte können einer Adsorptionsapparatur zugeführt werden und die gewonnene Salzsäure kann dann in bekannter Weise in einem Oxychlorierungsprozeß oder für andere chemische Reaktionen verwertet werden.

Das in der Kondensationseinrichtung gewonnene Destillat kann entweder in einem weiteren Schritt des erfindungsgemäßen Verfahrens aufgearbeitet oder als Brennstoff für die Feuerung des Brenners (2) verwertet werden.

Für die Aufarbeitung des Destillats kommen Trenntechniken wie Destillation, Extraktion, Kristallisation, Membranprozesse oder andere, vorzugsweise aber die Destillation in Frage. Da die Siedepunkte üblicher Weichmacher für PVC bei > 200 °C liegen, muß die Destillation unter stark vermindertem Druck und vorteilhafterweise in einem Kurzwegverdampfer erfolgen. Zur Abtrennung der unterschiedlichen Bestandteile des weichmacherhaltigen Destillats aus dem erfindungsgemäßen Verfahren wird die Aufarbeitung als fraktionierte Destillation durchgeführt. Der wichtigste Weichmacher für PVC ist gegenwärtig Phthalsäure-bis(2-ethylhexyl)-ester (DOP).

Besonders geeignet ist das erfindungsgemäße Verfahren für die Aufarbeitung aller Arten von Weich-PVC.

Die nachfolgenden Beispiele sollen die Erfindung erläutern.

Beispiele 1 bis 7

Ein Rotationsverdampfer wurde gemäß Figur 2 mit einem 500-cm$^3$ Rundkolben (21) und mit einer axialen Zuführung (25) für Stickstoff oder Wasser (zur Bildung von Wasserdampf), die bis in die Mitte des Kolbens (21) reichte, versehen. Der Kolben (21) ließ sich mit zwei passenden Heizpilzen (22) (maximale Leistung je 200 W) so einhüllen, daß die Drehbewegung (40 min$^{-1}$) nicht behindert wurde. Das Verbindungsrohr (24a) zwischen Kolben (21) und Drehantrieb (23) des Rotationsverdampfers wurde mit einem Heißluftgebläse warmgehalten.

Es erwies sich als vorteilhaft, die Heizpilze (22) mit voller Heizleistung zu betreiben, sie aber auf beiderseits angebrachten Stahlstangen so anzuordnen, daß sie graduell auseinandergeschoben werden konnten. Auf diese Weise ließen sich die gewünschten Temperaturen im Reaktionskolben (21) (350 °C oder 400 °C) gut einstellen. Die Apparatur mußte leicht schräg gestellt werden, um den abdestillierenden Weichmacher direkt hinter dem Verbindungsrohr (24a) in der Vorlage (27) auffangen zu können. In der Sammelvorlage sammelten sich weitere Produkte. Der abgespaltene Chlorwasserstoff wurde in einer nachgeschalteten, aus den Gaswaschflaschen (34) und (35) bestehenden Einrichtung mit Wasser absorbiert.

Zu Versuchsbeginn wurden jeweils 31 g Weich-PVC-Pulver (27,7 % DOP) in den Kolben gegeben und ein schwacher Stickstoffstrom (bei Beispiel 7 Wasserdampf) eingestellt. Nach Beendigung der Erhitzung zog man die beiden Heizpilze weit auseinander und kühlte den Kolben durch Anblasen mit kalter Luft rasch ab. Das dehydrochlorierte PVC ließ sich durch Kochen mit Wasser, Abfiltrieren und Waschen mit Wasser von anhaftenden Verunreinigungen befreien. Die Tabellen 1 und 2 zeigen die Ergebnisse.

Bei einer Temperatur von 350 bis 400 °C und einer Verweilzeiten im Bereich von 15 bis 30 min lieferte Weich-PVC Ausbeuten von 25 % dehydrochloriertem PVC, 25 % Weichmacherdestillat und 30-35 % Chlorwasserstoff sowie nicht kondensierbaren Kohlenwasserstoffen.

Der bei der thermischen Spaltung gewonnene Weichmacheranteil wies Gehalte von 3,3 % organisch gebundenem Chlor sowie von < 0,3 % Chlorid auf. Die Untersuchungen durch Gaschromatographie und Massenspektrometrie ergaben, daß das braune Öl großenteils aus Di-(2-ethylhexyl)-phthalat (DOP) bestand. Daneben waren noch erhebliche Anteile an Chloroctanen vorhanden.

Zur Aufarbeitung wurde das braune Öl einer fraktionierten Destillation bei 1 bis 5 mbar unterworfen. Die Destillationsapparatur bestand aus Siedekolben, Destillationsbrücke, Destillatteiler, Vorlagekolben, Kältefalle und Vakuumpumpe.

Die Ergebnisse der Destillation stellt Tabelle 3 dar. Die Ausbeute betrug 96,8 %.

4

Während Fraktion 1 als Hauptbestandteil diverse Chloroctane und Fraktion 2 überwiegend DOP enthielten, bestanden die Fraktionen 3 und 4 weitestgehend aus DOP.

Tabelle 1: Thermische Spaltung bei Drehbewegung, Versuchsbedingungen

| Versuch | Apparatur | | Dauer des Aufheizens | Verweilzeit bei Reaktionstemperatur | Reaktionstemperatur | Spülgas |
|---|---|---|---|---|---|---|
| | Anordnung der Heizpilze | Regelung der Temperatur | min | min | °C | |
| 1 | fest | geregelt | 30 | 15 | 342-355 | Stickstoff |
| 2 | fest | geregelt | 48 | 15 | 344-361 | Stickstoff |
| 3 | fest | geregelt | 72 | 15 | 343-356 | Stickstoff |
| 4 | beweglich | volle Heizleistung | 8 | 15 | 335-357 | Stickstoff |
| 5 | beweglich | volle Heizleistung | 8 | 30 | 345-355 | Stickstoff |
| 6 | beweglich | volle Heizleistung | 7 | 15 | 395-410 | Stickstoff |
| 7 | beweglich | volle Heizleistung | 6 | 15 | 342-355 | Wasserdampf |

Tabelle 2: Thermische Spaltung bei Drehbewegung, Versuchsergebnisse

| Versuch | Ausbeuten in % vom Einsatz | | | Dehydrochloriertes PVC Analysen | |
| --- | --- | --- | --- | --- | --- |
| | Dehydrochloriertes PVC | Destillat | Absorbierter Chlorwasserstoff | roh<br><br>% Chlor | mit Wasser gewaschen<br>% Chlor |
| 1 | 14 | 32 | nicht bestimmt | 0,40 | 0,06 |
| 2 | 28 | 20 | 34 | 0,35 | 0,31 |
| 3 | 29 | 20 | 50 | 0,42 | 0,33 |
| 4 | 33 | 12 | 34 | 0,49 | 0,42 |
| 5 | 32 | 26 | 45 | 0,56 | 0,42 |
| 6 | 24 | 31 | 24 | 0,29 | 0,21 |
| 7 | 32 | 30 | 10 | 0,95 | 1,3 |

Tabelle 3: Fraktionierte Destillation des Weichmacheranteils

| Fraktion | Siedetemperatur °C | Menge in % vom Einsatz | Zusammensetzung |
|---|---|---|---|
| 1 | 35-100 | 7,0 | ca. 40 % Chloroctane, ca. 10 % DOP |
| 2 | 100-175 | 9,6 | ca. 60 % DOP, ca. 15 % Ethylhexanol |
| 3 | 175-196 | 42,9 | ca. 90 % DOP |
| 4 | 193-214 | 20,4 | ca. 90 % DOP |
| Sumpf | > 214 | 6,1 | |
| Rückstand in der Apparatur | | 5,6 | |
| Rückstand in der Kältefalle | | 5,2 | |

**Patentansprüche**

1. Verfahren zur Gewinnung von Wertstoffen bei der Aufarbeitung von Polyvinylchlorid durch thermische Behandlung des Polyvinylchlorids, dadurch gekennzeichnet, daß man das Polyvinylchlorid auf eine Temperatur von 250 bis 500 C unter Ausschluß von Sauerstoff und Erzeugung von Chlorwasserstoff, kohlenstoffhaltigem Rückstand und einem weichmacherhaltigen Destillat erhitzt und aus dem Destillat durch eine fraktionierte Destillation den Weichmacher zurückgewinnt.

2. Verfahren nach Anspruch 1, dadurch gekennzeichnet, daß man die thermische Behandlung des Polyvinylchlorids in einem Drehrohrofen, Etagenofen oder Wirbelschichtofen durchführt.

Fig. 1

**Fig. 2**

PVC

21 22 22 24a M 23 24 25 26 27 28 29 30 31 32 33 34 35 36

EP 0 647 698 A1

10

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| A,D | WO-A-91 18960 (MENGES) <br> * Seite 21, Absatz 3 - Seite 22, Absatz 1; Ansprüche 1,9,22,23; Abbildung 3 * <br> --- | 1,2 | C10B53/00 |
| A | DATABASE WPI <br> Week 7423, <br> Derwent Publications Ltd., London, GB; <br> AN 74-42243V <br> & JP-A-48 067 190 (CHIBA INST TECHNOLOGY) <br> 13. September 1973 <br> * Zusammenfassung * <br> --- | 1,2 | |
| A | DATABASE WPI <br> Week 7742, <br> Derwent Publications Ltd., London, GB; <br> AN 77-74665Y <br> & JP-A-50 123 190 (FUJIKURA CABLE WORKS) <br> * Zusammenfassung * <br> --- | | |
| A | EP-A-0 226 895 (BROWN, BOVERI & CIE) <br> * Ansprüche 1,7,9; Abbildungen 1,2 * <br> ----- | 2 | **RECHERCHIERTE SACHGEBIETE (Int.Cl.6)** <br><br> C10B |

Der vorliegende Recherchenbericht wurde für alle Patentansprüche erstellt

| Recherchenort | Abschlußdatum der Recherche | Prüfer |
|---|---|---|
| DEN HAAG | 19. Januar 1995 | Meertens, J |

EPO FORM 1503 03.82 (P04C03)